Europäisches Patentamt

European Patent Office

Office européen des brevets

(11) Publication number: **0 359 526**
**A2**

# EUROPEAN PATENT APPLICATION

(21) Application number: **89309251.0**

(22) Date of filing: **12.09.89**

(51) Int. Cl.5: **G 11 B 27/30**
**G 11 B 15/00**

(30) Priority: **12.09.88 JP 229319/88**

(43) Date of publication of application:
**21.03.90 Bulletin 90/12**

(84) Designated Contracting States: **DE FR GB**

(71) Applicant: **KABUSHIKI KAISHA TOSHIBA**
**72, Horikawa-cho Saiwai-ku**
**Kawasaki-shi Kanagawa-ken 210 (JP)**

(72) Inventor: **Kimura, Naoki c/o Intellectual Property**
**Division**
**Toshiba Corporation 1-1-1, Shibaura**
**Minato-ku Tokyo (JP)**

(74) Representative: **Muir, Ian R. et al**
**HASELTINE LAKE & CO. Hazlitt House 28 Southampton**
**Buildings Chancery Lane**
**London WC2A 1AT (GB)**

(54) Apparatus for continuously recording/reproducing signals on plural recording media.

(57) A continuous recording/reproducing apparatus for continuously recording/reproducing signals on two record tapes includes first and second recording/reproducing systems (10, 110) for successively recording/reproducing a program signal and a positional data from, a circuit (21) for generating a start signal when a residual period of time of a first record tape in the first recording/reproducing system (10) which is operated in preceding to the second recording/reproducing system (110), a circuit (121) responsive to the start signal for starting a recording/reproducing operation of the second recording/reproducing system (110), a circuit (21) for transmitting the positional data read out from the first record tape to the second recording/reproducing system (110), a circuit (121) responsive to the transmitting circuit (21) for controlling reproducing operation of the second recording/reproducing system (110) so that the positional data read out from the second record tape in the second recording/reproducing system (110) agrees with the positional data read out from the first record tape and a circuit (122, 116) for outputting the signals from the second recording/reproducing system (110) after the an agreement of the positional data read out from the first and second record tapes has been established.

**Description**

## APPARATUS FOR CONTINUOUSLY RECORDING/REPRODUCING SIGNALS ON PLURAL RECORDING MEDIA

The present invention relates generally to a continuous recording/reproducing apparatus, and more particularly, to a recording/reproducing apparatus for continuously recording/reproducing signals on a plurality of recording media.

Recently there has been developed a magnetic tape recorder which digitally records audio signals quantized from analog audio signals on a magnetic recording tape (hereinafter referred to as a record tape) by a rotary magnetic head system utilizing an azimuth difference.

In this type of magnetic tape recorder, two magnetic heads are mounted on a rotary cylinder at positions opposite to each other, i.e. separated by an angle of 180°C, similar to conventional video cassette recorders. A record tape is wound by a prescribed angle around the cylinder. The magnetic heads each record signals on the record tape with a prescribed track pattern which has an oblique direction to the width of the record tape.

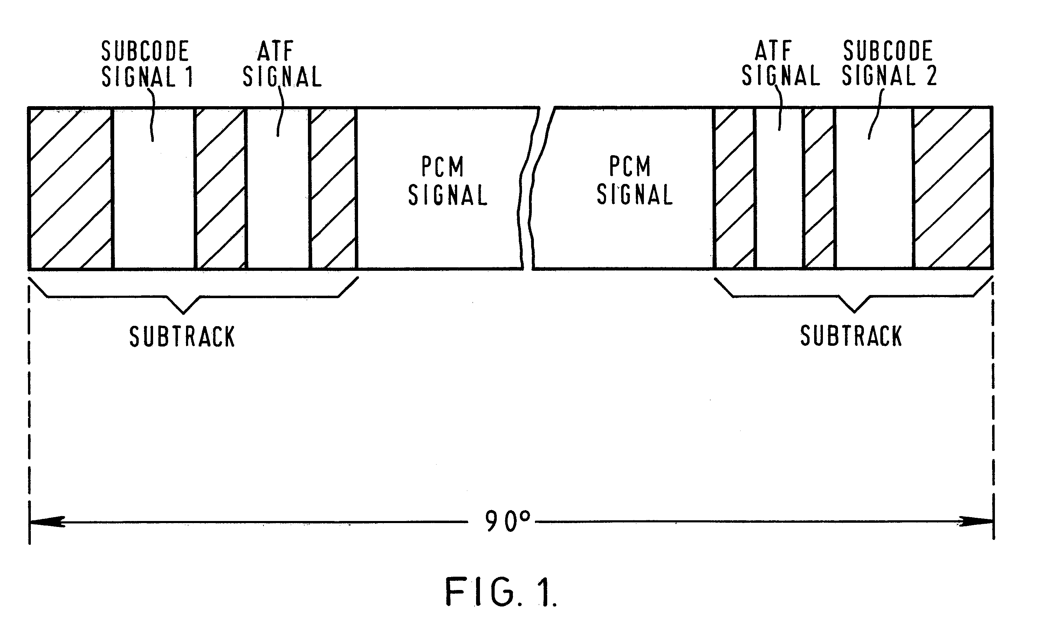

Figure 1 shows a signal format for each track. Since the record tape is wound on the rotary cylinder by a prescribed angle, for instance an angle of 90°C, record signals for each track are expressed by radian. In the signal format, the left end in the drawing indicates the leading side of recording. A program signal, such as an audio signal, coded into PCM form is recorded on the center area of the format. The center area is referred to hereafter as a PCM signal area. Two ATF (Automatic Track Finding) signals are recorded on areas outside the PCM signal area. Further, subcode signals 1 and 2 indicating program indexes, time indexes, etc. are recorded on respective areas outside the ATF signals, respectively. The areas including subcode signals and the ATF signals are each referred to as a subtrack.

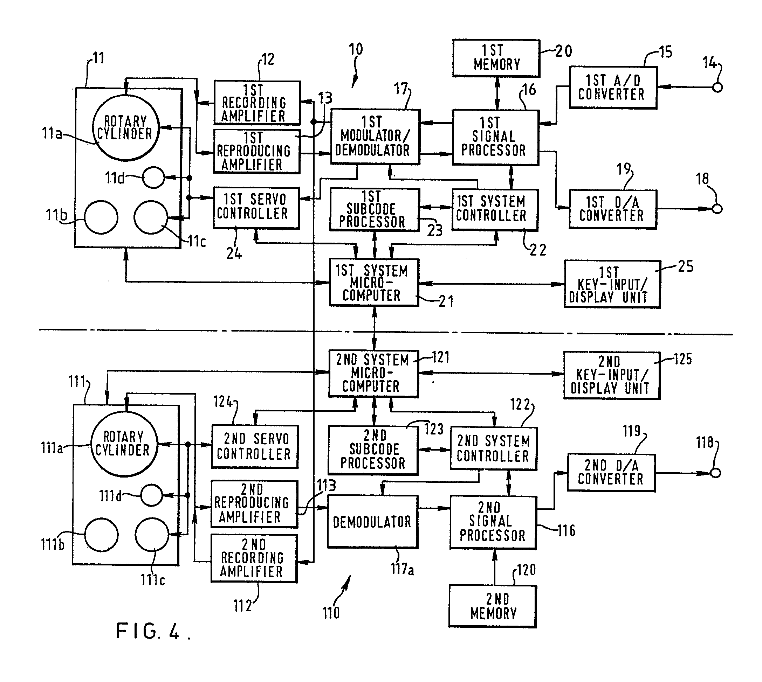

The PCM signal is composed of 128 blocks. Each block of the PCM signal includes 6 words. Each word of the block comprises 16 bits and this 16-bit word is recorded by being divided into two units. Each unit of the 16-bit word includes 8 bits and the 8-bit unit is referred to as a symbol. Further, the PCM signal includes a synchronising signal composed of one symbol; an identification signal, a so-called ID code, for discriminating a PCM quantizing frequency; an address signal for indicating the address of a subject track; a parity code for detecting errors of both the ID code and the address signal; etc. These signals are not illustrated in Figure 4, but they are located in the leading portion of the PCM signal area prior to the PCM signals of the program signals.

There is a conventional audio cassette tape recorder accommodating two recording/reproducing systems therein. In the tape recorder, the recording/reproducing systems successively record or reproduce a program of music etc. on or from two record tapes, if the program is longer than a single record tape. The recording/reproducing operation of the tape recorder is succeeded from one system which is precedingly operated to the other, when a record tape in the preceding system has finished. Generally, such a tape finish, i.e., a timing of the operation change from the preceding system to the other is detected by a sudden change of tension of the record tape in the preceding system. Thus, the recording/reproducing operation of the other system, i.e., the follower system, starts after the recording/reproducing operation of the preceding system has finished.

However, such a tape recorder cannot avoid a part of the program dropping out. This is because a time lag occurs in the operation change from the preceding system to the follower system. Further it takes time until the follower system stabilizes both electrically and mechanically.

To avoid this problem, manual change of the successive recording operation from the preceding system to the follower system may be carried out instead of the automatic operation mentioned above, before the recording operation in the preceding system finishes. By manual operation, a part of the program can be recorded on two record tapes simultaneously. Thus, the drop out of a part of program is avoided. However, it is difficult to change smoothly the reproducing operation from the preceding system to the follower system. Thus part of the program recorded on the two record tapes may be repeated twice upon changing the reproducing operation from the preceding system to the follower system, when the operation change is manually carried out to avoid the drop out of the program. Such a drop out or repeating of a part of the program is difficult for listeners to ignore.

The present invention therefore seeks to provide a recording/reproducing apparatus for continuously recording/reproducing signals on plural recording media in which such problems are avoided, without causing any dropout or repeating of program.

According to the present invention there is provided recording/reproducing apparatus for recording/reproducing signals on plural recording media comprising first and second recording/reproducing means for successively recording/reproducing a program signal CHARACTERIZED IN THAT the apparatus further comprises:

means for, during operation, generating a start signal when a residual period of recording/reproducing time is determined for a first record medium in the first recording/reproducing means, which is operated prior to the second recording/reproducing means;

means responsive to the start signal for starting a recording/reproducing operation for the second recording/reproducing means and a second record medium therein;

means for transmitting positional data read out from the first record medium to the second recording/reproducing means;

means responsive to the positional data received from the transmitting means for controlling the reproducing operation of the second recording/reproducing means to make the positional data read out from the second record medium in the second recording/reproducing means agree with the positional data read out from the first record medium; and

means for outputting the signals from the second recording/reproducing means after an agreement of the positional data read out from the first and second record media has been established.

For a better understanding of the present invention and many of the attendant advantages thereof reference will now be made, by way of example, to the accompanying drawings, wherein:

Figure 1 is a signal format of a digital signal for tape recording;

Figure 2 is a block diagram showing one embodiment of a continuous recording/reproducing apparatus according to the present invention;

Figure 3 is a timing chart for explaining the operation of the continuous recording/reproducing apparatus of Figure 1; and

Figure 4 is a block diagram showing another embodiment of a continuous recording/reproducing apparatus according to the present invention.

The present invention will be described in detail with reference to the Figures 1 to 4. Throughout the drawings, like or equivalent reference numerals or letters will be used to designate like or equivalent elements for simplicity of explanation.

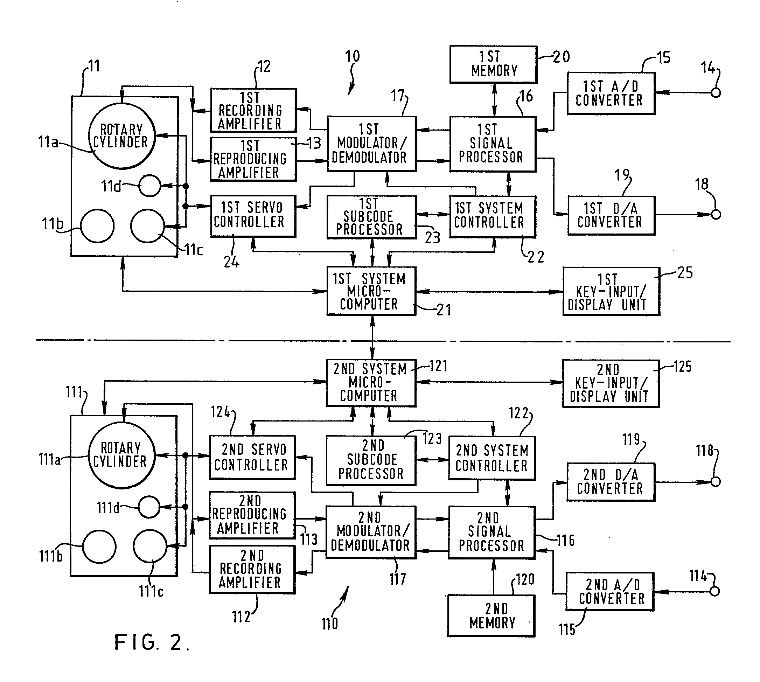

Referring now to Figure 2, a first embodiment of the continuous recording/reproducing apparatus for continuously recording/reproducing signals on a plurality of recording media according to the present invention will be described in detail. Figure 2 is a block diagram showing a first embodiment of a continuous recording/reproducing apparatus. In Figure 2, two recording/reproducing systems are shown divided by a single dot-dash line.

The upper system in the drawing will be referred to as a first recording/reproducing system 10. This first recording/reproducing system 10 has a first recording/reproducing mechanism 11 comprised of a rotary cylinder 11a with two magnetic heads (not shown), two reel bases 11b and 11c and a capstan lid. The two magnetic heads are oppositely mounted on the rotary cylinder 11a with 180° separation from each other and azimuths different from each other. These magnetic heads are alternately connected to a first recording amplifier 12 in the recording operation, or to a first reproducing amplifier 13 in the reproducing operation.

A signal to be recorded is applied to a recording signal input terminal 14. The signal (referred as to a recording signal hereafter) is then applied to the rotary cylinder 11a through a first A/D converter 15, a first signal processor 16, a first modulator/demodulator 17 and the first recording amplifier 12. Thus, the magnetic heads of the rotary cylinder 11a record the recording signal on a record tape wound on the rotary cylinder 11a.

A signal reproduced from a record tape by the magnetic heads of the rotary cylinder 11a is applied to the first reproducing amplifier 13. The amplified signal (referred to as a reproduced signal hereafter) is then fed to a first reproduced signal output terminal 18 through the first modulator/demodulator 17, the first signal processor 16 and a first D/A converter 19.

The first signal processor 16 is provided with a first memory 20. The recording signal and the reproduced signal are temporarily stored in the first memory 20 for signal processing of the first signal processor 16 in both the recording and the reproduction operations. For example, an additive processing of a parity signal, an interleaving processing and the like are carried out in the recording operation. In the reproducing operation, an error correcting processing, a deinterleaving processing and the like are carried out for the reproduced signal from the first modulator/demodulator 17. The error correcting processing is carried out based on the parity signal.

The first recording/reproducing system 10 also includes a first system microcomputer 21. The first system microcomputer 21 prepares time index codes or program index codes. These index codes are recorded on the record tape together with the recording signals. Thus, the index codes indicate positional data of the signals recorded on the record tape. The first system microcomputer 21 supplies these index codes to the first signal processor 16 through a first system controller 22 after the additive processing of the parity signal and the interleaving processing are carried out in a first subcode processor 23. The first system controller 22 adds an ATF signal to the index codes or other code signals from the first subcode processor 23. As a result, a signal output from the first signal processor 16 in the recording operation (the signal will be referred as to a digitized recording signal hereafter) includes a PCM signal digitized from the recording signal, the subcode signals, the ATF signal, etc. These signals are arranged in a prescribed order in every track of the digitized recording signal, as shown in FIGURE 1.

The first modulator/demodulator 17 codes the digitized recording signal signal output from the first signal processor 16 according to a so-called 8-10 code modulation system, for every track in synchronism with the rotating timing of the magnetic heads. The first modulator/demodulator 17 applies the 8-10 code modulation signal together with a margin bit or a PLL control signal, etc. to the first recording amplifier 12.

In the reproducing operation, the first modulator/demodulator 17 decodes the reproduced signal, which corresponds to the 8-10 code modulation signal, output from the first reproducing amplifier 13 according to an 8-10 code demodulation system, i.e., a reverse conversion system of the 8-10 code modulation system. The PCM signal and the subcode signal in the demodulated reproducing signal are applied to signal processor 16. The ATF signal in the demodulated reproducing signal is applied to a first servo controller 24. The first servo controller 24 controls the first recording/reproducing mechanism 11 to establish the tracking operation. The first system controller 22 applies the subcode signal to the first system microcomputer 21. Then, the first system microcomputer 21 is enabled to recognize recording/reproducing positional data corresponding to the program index code and the time index code. These positional data are displayed on a key-input/display unit 25. Further, the first key input/display unit 25 displays key input data.

In order to perform the tracking operation in the reproducing operation, a tracking error signal is generated from the ATE signal supplied to the first servo controller 24. Motors for the rotary cylinder 11a, the capstan 11d and the reel bases 11c, 11d are controlled by the tracking error signal. The first system microcomputer 21 constitutes a PLL loop together with the motors and the servo controller 24.

The lower system in the drawing (FIGURE 2) will be referred to as a second recording/reproducing system 110.

The second recording/reproducing system 110 has a similar construction to the first recording/reproducing system 10. That is, in the second recording/reproducing system 110 a second recording/reproducing mechanism 111 corresponds to the first recording/reproducing mechanism 11. This second recording/reproducing mechanism 111 comprises a rotary cylinder 111a with two magnetic heads (not shown), two reel bases 111b and 111c and a capstan 111d, which correspond to the rotary cylinder 11a, the reel bases 11b and 11c and the capstan 11d of the first recording/reproducing mechanism 11.

Further, the second recording/reproducing system 110 includes other elements or circuits corresponding to those of the first recording/reproducing system 10. That is, a second recording amplifier 112 corresponds to the first recording amplifier 12; a second reproducing amplifier 113 corresponds to the first reproducing amplifier 13; asecond recording signal input terminal 114 corresponds to the first recording signal input terminal 14; a second A/D converter 115 corresponds to the first A/D converter 15; a second signal processor 116 corresponds to the first signal processor 16; a second modulator/demodulator 117 corresponds to the first modulator/demodulator 17; and a second reproduced signal output terminal 118 corresponds to the first reproduced signal output terminal 18.

Also a second D/A converter 119 corresponds to the first D/A converter 19; a second memory 120 corresponds to the first memory 20; a second system microcomputer 121 corresponds to the first system microcomputer 21; a second system controller 122 corresponds to the first system controller 22 ; a second subcode processor 123 corresponds to the first subcode processor 23; a second servo controller 124 corresponds to the first servo controller 24, and a second key-input/display unit 125 corresponds to the first key-input/display unit 25.

The first and second system microcomputers 21 and 121 are coupled to each other for mutual communication. In this mutual communication, the recording/reproducing positional data such as the time index codes and the program index codes which are prepared or read by the first and second system microcomputers 21 and 121 are transmitted to each other.

An operation to perform a continuous recording from the first recording/reproducing system 10 to the second recording/reproducing system 110 by this recording/reproducing apparatus will now be explained hereinafter.

A signal to be recorded is supplied both to the first and the second recording signal input terminals 14 and 114 from a program source. The first recording/reproducing system 10 is operated to record this signal prior to the second recording/reproducing system 110. When the recording operation of the first recording/reproducing system 10 advances to a tape position where a residual period of time of the record tape becomes shorter than a predetermined period T, the first system microcomputer 21 of the first recording/reproducing system 10 transmits a start signal to cause the second system microcomputer 121 of the second recording/reproducing system 110 to start the recording operation of system 110.

The residual period of time of the record tape in the first recording/reproducing system 10 is calculated in a conventional manner, e.g., in the manner disclosed in the US Patent No. 4,172,231. Therefore, when the residual period of time corresponds to the predetermined period T, the first system microcomputer 21 transmits the start signal to the second system microcomputer 121. At present, the conventional calculation manner of the residual period of time has an accuracy of about one minute. Thus, the predetermined period of time T is set to, e.g., one or two minutes.

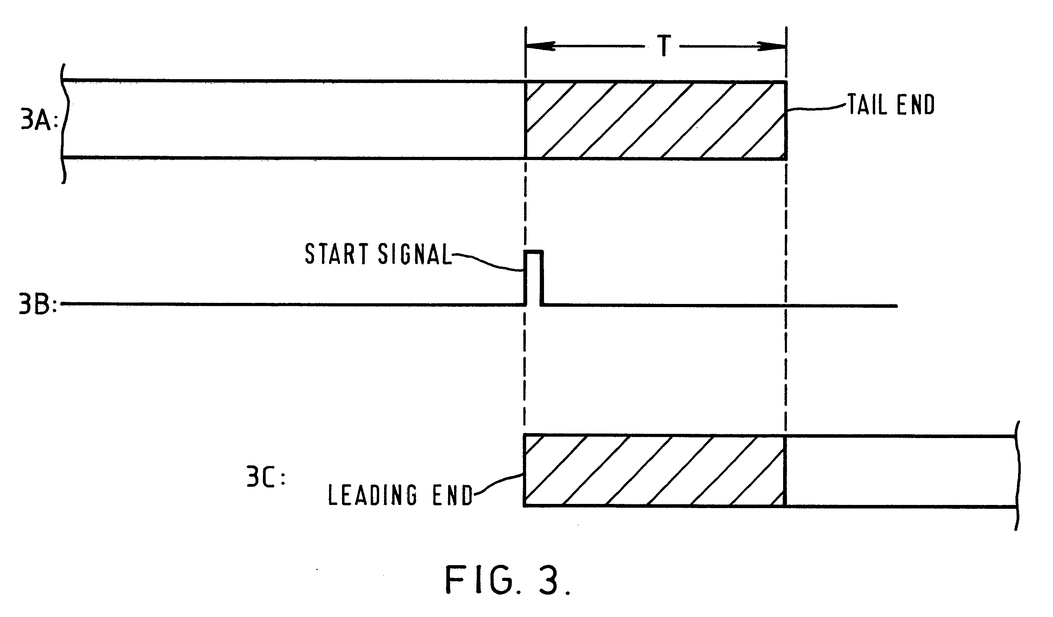

FIGURE 3 is a timing chart in which the start signal has been generated and then the second system microcomputer 121 starts the system. Graph 3A shows the timing for the finish of the recording/reproducing operation by the first recording/reproducing system 10. Graph 3B shows the start signal, and graph 3C shows the time that the second recording/reproducing system 110 starts its recording/reproducing operation.

As shown in FIGURE 3, the second recording/reproducing system 110 starts its recording operation in response to the start signal. Thus, signals of a part of the program are simultaneously recorded on both the record tapes in the first and second systems 10 and 110 for the predetermined period T. As shown, the program is recorded on the record tape in the second recording/reproducing system 110 from the leading end of the record tape.

In the reproducing operation, the reproduced signal read by the magnetic heads in the first recording/reproducing mechanism 11 is applied to the first modulator/demodulator 17 through the first reproducing amplifier and the first modulator/demodulator 17 decodes the reproduced signal as described above. The digitized reproduced signal output from the first modulator/demodulator 17 is applied to the first signal processor 16. The first signal processor 16 separates the positional data, i.e., the time index code and the program index code from the digitized reproduced signal and positional data, e.g., the time index code, is applied to the first system microcomputer 21 through the first system controller 22.

The first system microcomputer 21 transmits a start signal to the second system microcomputer 121 when the residual period of time of the record tape in the first recording/reproducing system corresponds to the predetermined period T. Thus, the second recording/reproducing system 110 starts its reproducing operation for the record tape loaded therein in response to the start signal.

In the reproducing operation of the second recording/reproducing system 110, the reproduced signal read by the magnetic heads in the second recording/reproducing mechanism 111 is applied to the second modulator/demodulator 117 through the second reproducing amplifier 113 and the second modulator/demodulator 117 decodes the reproduced signal as described above. The digitized reproduced signal output from the second modulator/demodulator 117 is applied to the second signal processor 116 and the second signal processor 116 separates the positional data, i.e., the time index code and the program index code from the digitized reproduced signal. Positional data, e.g., the time index code, is applied to the second system microcomputer 121 through the second system controller 122. However, the PCM signals processed by the second signal processor 116 are muted without being output to the second D/A converter 119 until the reproducing operation of the second recording/reproducing system 110 synchronizes with the reproducing operation of the first recording/reproducing system 10.

In the predetermined period T, the first and second system microcomputers 21 and 121 mutually transmit the recording/reproducing positional data, i.e., the time index codes, to each other. Or the first system microcomputer 21 supplies its time index code to the second system microcomputer 121. Thus, the second system microcomputer 121 controls the second recording/reproducing mechanism 111, through the second servo controller 124 based on the time index code transmitted from the first system microcomputer 21, to transport the record tape so that the time index code read out from the record tape in the second recording/reproducing system 110 agrees with the time index code read out from the record tape in the first recording/reproducing system 10.

When the time index codes read out from the record tapes agree with each other, the reproducing operation of the second recording/reproducing system 110 synchronizes with the reproducing operation of the first recording/reproducing system 10. After the reproducing operations have synchronized with each other, the second system controller 122 releases the muting operation of the second signal processor 116 so that the reproduced PCM signals are applied to the second D/A converter 119 from the second signal processor 116 and the second D/A converter 119 converts the PCM signals to analog signals, i.e., the reproduced signals.

The synchronizing operation for bringing the time index codes of the record tapes into agreement is established within the predetermined period T. Thus, the program successively recorded on both record tapes may be reproduced without any dropout or repetition of signals.

As described above, the first embodiment of the continuous recording/reproducing apparatus is able to perform continuous recording/reproducing without causing any discontinuity of program signals.

The start signal generated from the first system microcomputer 21 in the recording operation can be recorded on the subtrack area of the record tape in the first system with the other subcode signals. Then, the start signal is automatically read out in the reproducing operation of the first recording/reproducing system 10. The start signal is then applied to the second system microcomputer 121 through the first system microcomputer 21. Therefore, the start timing of the reproducing operation of the second recording/reproducing system 110 will be more accurate than the method involving calculation of the residual period of time.

FIGURE 4 shows a second embodiment of a continuous recording/reproducing apparatus according to the present invention for continuously recording/reproducing signals on plural recording media. In Figure 4, the same elements as those in FIGURE 2 are given the same references. In the second embodiment the record signal to be recorded on the record tape in the second recording/reproducing system 110 is supplied from the first recording/reproducing system 10, i.e., the record signal path comprised of the recording signal input terminal 14, the first A/D converter 15, the first signal processor 16 and the first modulator/demodulator 17. Thus, the second recording/reproducing system 110 does not require some circuit blocks or elements such as the signal input terminal 14 and the first A/D converter 15. Further a circuit block 117a corresponding to the second modulator/demodulator 117 of FIGURE 2 does not require a modulator function, i.e., the circuit block 117a can include solely a demodulator. Also, the first A/D converter 19 is used commonly by both the first and second recording/reproducing systems 10 and 110, as described above. Therefore, the same recording/reproducing positional data, i.e., the time index code and the program index code is recorded on both record tapes in the first and second recording/reproducing systems 10 and 110 for the predetermined period T (see FIGURE 3). Thus, in the reproducing operation the positional data such as the time index codes read out from the record tapes have the same signal rates.

The positional data, e.g., the time index code, is fed to the first system microcomputer 21 through the first system controller 22. The first system microcomputer 21 transmits a start signal to the second system microcomputer 121 when the residual period of time of the record tape in the first recording/reproducing system 10 becomes the predetermined period T. Thus, the second recording/reproducing system 110 starts its reproducing operation for the record tape loaded therein in response to the start signal.

In the reproducing operation of the second recording/reproducing system 110, the reproduced signal read by the magnetic heads in the second recording/reproducing mechanism 111 is applied to the demodulator 117a through the second reproducing amplifier 113. The demodulator 117a decodes the reproduced signal as described above and the digitized reproduced signal output from the demodulator 117a is applied to the second signal processor 116. The second signal processor 116 separates the positional data, i.e., the time index code and the program index code from the digitized reproduced signal. The positional data, e.g., the time index code, is fed to the second system microcomputer 121 through the second system controller 122. However, the PCM signals processed by the second signal processor 116 are muted without being output to the second D/A converter 119 until the reproducing operation of the second recording/reproducing system 110 synchronizes with the reproducing operation of the first recording/reproducing system 10.

In the predetermined period T, the first system microcomputer 21 supplies its time index code to the second system microcomputer 121. Thus, the second system microcomputer 121 controls the second recording/reproducing mechanism 111 through the second servo controller 124 based on the time index code transmitted from the first system microcomputer 21 to transport the record tape such that the time index code read out from the record tape in the second recording/reproducing system 110 is brought into agreement with the time index code read out from the record tape in the first recording/reproducing system 10.

When the time index codes read out from the record tapes agree with each other, the reproducing operation of the second recording/reproducing system 110 synchronizes with the reproducing operation of the first recording/reproducing system 10. After the reproducing operations have synchronized with each other, the second system controller 122 releases the muting operation of the second signal processor 116 so that the reproduced PCM signals are applied to the second D/A converter 119 from the second signal processor 116 and the second D/A converter 119 converts the PCM signals to analog signals, i.e., the reproduced signals.

The synchronizing operation for agreeing the time index codes of the record tapes is established within the predetermined period T. Thus, the program successively recorded on both record tapes may be reproduced without any dropout or repeating of signal.

Further, in this embodiment, the positional data, e.g., the time index codes recorded on the record tapes have the same signal rates, as described above. Thus, the synchronization of the first and second recording/reproducing mechanisms 11 and 111 is established relatively easily and accurately. That is, in this second embodiment of a continuous recording/reproducing apparatus, the continuity of the program successively reproduced from the two record tapes is secured by the accuracy of bit order. The accuracy of the continuity of the reproduced program may be improved relative to the accuracy obtained by the first embodiment as shown in Figure 2. This is because the PCM quantizing frequencies may not completely agree with each other in the first and second A/D converters 15 and 115 of Figure 2.

The present invention is not limited to such embodiments in which a plural set of recording/reproducing systems are accommodated in one unit. That is, the present invention can be practiced by interfacing a plurality of individual recording/reproducing sets. The present invention can perform the continuous recording/reproducing proceeding from the first recording/reproducing system 10 to the second recording/reproducing system 110 without causing a discontinuity of program, i.e. signal dropout or repeating of signals, as described above. Obviously more than two systems could be used if the signals to be recorded will occupy more than two tapes. Each subsequent system will operate in a corresponding manner with the preceding system in the manner of operation of the second system with the first system.

As described above, the present invention can provide an extremely advantageous signal recording/reproducing apparatus for continuously recording/reproducing signals on plural recording media.

While there have been illustrated and described what are at present considered to be preferred embodiments of the present invention, it will be understood by those skilled int he art that various changes and modifications may be made, and equivalents may be substituted for elements thereof without departing from the present invention. In addition, many modifications may be made to adapt a particular situation or material to the teaching of the present invention without departing therefrom. Therefore, it is intended that the present invention not be limited to the particular embodiment disclosed as the best mode contemplated for carrying out the present invention, but that the present invention include all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer of alternative inventive concepts that are included in the contents of the application and which could be defined by claims differing in scope from the following claims, which different claims may be adopted subsequently during prosecution, for example for the purposes of a divisional application.

## Claims

1. A recording/reproducing apparatus for recording/reproducing signals on plural recording media comprising first and second recording/reproducing means (10, 110) for successively recording/reproducing a program signal CHARACTERIZED IN THAT the apparatus further comprises:

means (21) for, during operation, generating a start signal when a residual period of recording/reproducing time is determined for a first record medium in the first recording/reproducing means (10), which is operated prior to the second recording/reproducing means (10);

means (121 responsive to the start signal for starting a recording/reproducing operation of the second recording/reproducing means (110) and a second record medium therein;

means (21) for transmitting positional data read out from the first record medium to the second recording/reproducing means (110);

means (121) responsive to the positional data received from the transmitting means for controlling the reproducing operation of the second recording/reproducing means (110) to make the positional data read out from the second record medium in the second recording/reproducing means (110) agree with the positional data read out from the first record medium; and

means (122, 116) for outputting the signals from the second recording/reproducing means (110) after an agreement of the positional data read out from the first and second record media has been established.

2. A recording/reproducing apparatus as claimed in claim 1, wherein the first and second recording/reproducing means (10, 110) each has a recording circuit (15/115, 16/116, 17/117, 12/112, 22/122, 23/123) for recording both the program signal and positional data.

3. A recording/reproducing apparatus as claimed in claim 1, wherein the recording circuits have a common source means (23) for generating positional data for recording in the first and second media.

4. A recording/reproducing apparatus as claimed in claim 2, wherein the recording circuits each have source means (23/123) for generating the positional data.

5. A recording/reproducing apparatus as claimed in claim 3, wherein the recording circuits have common circuits for combining the program signal and the positional data for recording on the first and second recording media.

6. A reproducing apparatus for reproducing signals on plural recording media comprising first and second reproducing means (10, 110) for successively reproducing a program signal CHARACTERIZED IN THAT the apparatus further comprises:

means (21) for, during operation, generating a start signal when a residual period of reproducing time is determined for a first record medium in the first reproducing means (10), which is operated prior to the second reproducing means (110);

means (121 responsive to the start signal for starting a reproducing operation of the second reproducing means (110) and a second record medium therein;

means (21) for transmitting positional data read out from the first record medium to the second reproducing means (110);

means (121) responsive to the positional data received from the transmitting means for controlling the reproducing operation of the second reproducing means (110) to make the positional data read out from the second record medium in the second reproducing means (110) agree with the positional data read out from the first record medium; and

means (122, 116) for outputting the signals from the second reproducing means (110) after an agreement of the positional data read out from the first and second record media has been established.

7. A recording/reproducing or reproducing apparatus according to any preceding claim, wherein the first and second recording/reproducing means or reproducing means are formed by separate or separable units.

8. A recording/reproducing or reproducing apparatus according to any preceding claim, having one or more additional recording/reproducing means or reproducing means correspondingly structured and arranged such that all cooperate in pairs in like manner to the first and second recording/reproducing means or reproducing means whereby reproducing operation passes in turn successively from the first to second then third and any subsequent reproducing means at the detection of said residual period of the reproduced recording medium.

FIG. 1.

EP 0 359 526 A2

FIG. 2.

EP 0 359 526 A2

FIG. 3.

EP 0 359 526 A2

FIG. 4.